(19) Europäisches Patentamt
European Patent Office
Office européen des brevets

(11) **EP 3 229 232 A1**

(12) **EUROPEAN PATENT APPLICATION**

(43) Date of publication:
**11.10.2017 Bulletin 2017/41**

(51) Int Cl.:
**G10L 17/04** *(2013.01)*

(21) Application number: **17163685.5**

(22) Date of filing: **29.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.04.2016 CN 201610216660**

(71) Applicant: **FUJITSU LIMITED**
**Kawasaki-shi,**
**Kanagawa 211-8588 (JP)**

(72) Inventors:
• **SHI, Ziqiang**
  **Beijing 100027 (CN)**
• **LIU, Liu**
  **Beijing 100027 (CN)**
• **LIU, Rujie**
  **Beijing 100027 (CN)**

(74) Representative: **Fenlon, Christine Lesley**
**Haseltine Lake LLP**
**Lincoln House, 5th Floor**
**300 High Holborn**
**London WC1V 7JH (GB)**

(54) **METHOD FOR SPEAKER RECOGNITION AND APPARATUS FOR SPEAKER RECOGNITION**

(57) The present invention discloses a method for speaker recognition and an apparatus for speaker recognition. The method for speaker recognition comprises: extracting, from a speaker-to-be-recognized corpus, voice characteristics of a speaker to be recognized: obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and comparing the speaker-to-be-recognized model with known speaker models, to determine whether or not the speaker to be recognized is one of known speakers.

```
┌─────────────────────────────────────────────────────────────────────┐
│ extracting, from a speaker-to-be-recognized corpus, voice            │─ S1
│ characteristics of a speaker to be recognized                        │
└─────────────────────────────────────────────────────────────────────┘
                                    │
                                    ▼
┌─────────────────────────────────────────────────────────────────────┐
│ obtaining a speaker-to-be-recognized model based on the voice        │─ S2
│ characteristics of the speaker to be recognized, a universal         │
│ background model UBM, a gradient universal speaker model GUSM and a   │
│ total change matrix                                                   │
└─────────────────────────────────────────────────────────────────────┘
                                    │
                                    ▼
┌─────────────────────────────────────────────────────────────────────┐
│ comparing the speaker-to-be-recognized model with known speaker      │─ S3
│ models, to determine whether or not the speaker to be recognized is  │
│ one of known speakers                                                 │
└─────────────────────────────────────────────────────────────────────┘
```

Fig 1

EP 3 229 232 A1

**Description**

TECHNICAL FIELD

The present invention relates generally to the field of information processing. Particularly, embodiments of the present invention relate to a method and an apparatus capable of performing speaker recognition accurately.

BACKGROUND ART

In recent years, voice-based information processing techniques have been developed rapidly and applied widely, and one relatively important technique there among is a voice-based technique for recognizing a speaker, which is called speaker recognition and also called voiceprint recognition. For example, speaker recognition may be applied to scenarios of confirming an identity of a speaker, for example, court hearings, remote financial services, security procedure, and may also be applied to fields such as voice retrieval, antiterrorism, military affairs.

Although voice characteristics per se of a speaker have relative stability, actual capturing of speaker voice would inevitably be influenced by a sound propagation channel, an audio capturing device, ambient environmental noise and the like. This would cause changes in the obtained voice characteristics of the speaker, and obviously would cause disadvantageous influences upon the performance of speaker recognition.

It is desirable to overcome disadvantageous influences produced by a sound propagation channel, an audio capturing device, ambient environmental noise and the like upon speaker recognition, so as to improve the accuracy of speaker recognition.

SUMMARY OF THE INVENTION

A brief summary of the present invention is given below to provide a basic understanding of some embodiments of aspects of the present invention. It should be understood that the summary is not exhaustive; it does not intend to define a key or important part of the present invention, nor does it intend to limit the scope of the present invention. The object of the summary is only to briefly present some concepts, which serves as a preamble of the detailed description that follows.

It is desirable to provide a method and an apparatus for recognizing a speaker accurately.

According to an embodiment of one aspect of the present invention, there is provided a method for speaker recognition, the method comprising: extracting, from a speaker-to-be-recognized corpus, voice characteristics of a speaker to be recognized: obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and comparing the speaker-to-be-recognized model with known speaker models, to determine whether or not the speaker to be recognized is one of known speakers.

According to an embodiment of another aspect of the present invention, there is provided an apparatus for speaker recognition, the apparatus comprising: a speaker voice characteristic extracting device configured to: extract, from a speaker-to-be-recognized corpus, voice characteristics of a speaker to be recognized: a speaker model constructing device configured to: obtain a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and a speaker recognizing device configured to: compare the speaker-to-be-recognized model with known speaker models to determine whether or not the speaker to be recognized is one of known speakers.

In addition, according to an embodiment of another aspect of the present invention, there is further provided a storage medium. The storage medium comprises machine-readable program code which, when being executed on an information processing apparatus, causes the information processing apparatus to perform the above method according to embodiments of the present invention.

Besides, according to an embodiment of yet another aspect of the present invention, there is further provided a program product. The program product comprises machine-executable instructions which, when being executed on an information processing apparatus, causes the information processing apparatus to perform the above method according to embodiments of the present invention.

BRIEFT DESCRIPTION OF THE DRAWINGS

The above and other objects, features and advantages of the present invention would be understood more easily with reference to embodiments of the present invention which are described, by way of example only, in combination with the appended drawings below. Components in the appended drawings aim only to show the principle of the present invention. In the appended drawings, identical or similar technical features or components are denoted by same or similar reference signs. In the appended drawings:

     FIG. 1 illustrates a flowchart of a method for speaker recognition according to an embodiment of the present invention.

FIG. 2 illustrates a flowchart of a method for obtaining a universal background model UBM and a gradient universal speaker model GUSM according to an embodiment of the present invention.

FIG. 3 illustrates a flowchart of a method for obtaining a total change matrix and known speaker models according to an embodiment of the present invention.

FIG. 4 illustrates a structural block diagram of an apparatus for speaker recognition according to an embodiment of the present invention.

FIG. 5 illustrates a schematic block diagram of a computer which may be used for implementing the method and apparatus according to the embodiments of the present invention.

DETAILED DESCRIPTION OF THE EMBODIMENTS

Exemplary embodiments of the present invention will be described in detail combined with the appended drawings below. For the sake of clarity and conciseness, the specification does not describe all features of actual embodiments. However, it should be understood that in developing any such actual embodiment, many decisions specific to the embodiments must be made, so as to achieve specific objects of a developer; for example, those limitation conditions related to the system and services are met, and these limitation conditions possibly would vary as embodiments are different. In addition, it should be appreciated that although developing tasks are possibly complicated and time-consuming, such developing tasks are only routine tasks for those skilled in the art benefiting from the contents of the disclosure.

It should also be noted herein that, to avoid the present invention from being obscured due to unnecessary details, only those device structures and/or processing steps closely related to the solution according to the present invention are shown in the appended drawings, while omitting other details not closely related to the present invention. In addition, it should also be noted that elements and features described in one figure or one embodiment of the present invention can be combined with elements and features shown in one or more other figures or embodiments.

The basic idea of embodiments of the present invention is: a universal model reflecting distribution of voice characteristics in a characteristic space and changes thereof and a model reflecting environmental changes are constructed in advance through training, a speaker-to-be-recognized model free of influences produced by a sound propagation channel, an audio capturing device and ambient environmental noise can be obtained based on the above models and specific voice characteristics of a speaker to be recognized, and the speaker-to-be-recognized model is compared with known speaker models obtained in the same way, so as to perform speaker recognition.

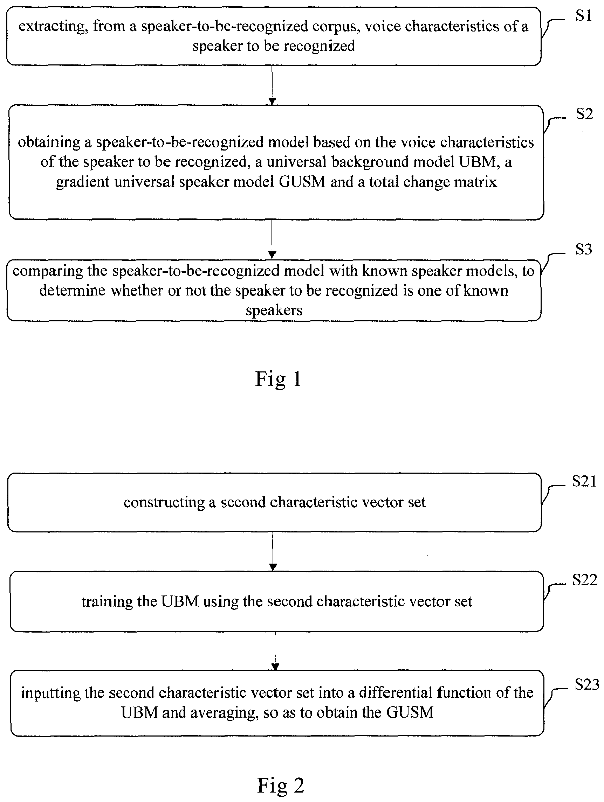

The flow of a method for speaker recognition according to an embodiment of the present invention will be described with reference to FIG. 1 below.

FIG. 1 illustrates a flowchart of a method for speaker recognition according to an embodiment of the present invention. As shown in FIG. 1, the method for speaker recognition according to the embodiment of the present invention comprises the steps of: extracting, from a speaker-to-be-recognized corpus, voice characteristics of a speaker to be recognized (step S1); obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes (step S2); and comparing the speaker-to-be-recognized model with known speaker models, to determine whether or not the speaker to be recognized is one of known speakers (step S3).

In the step S1, voice characteristics of a speaker to be recognized are extracted from a speaker-to-be-recognized corpus.

Specifically, the speaker-to-be-recognized corpus is scanned by sliding a predetermined window with a predetermined sliding step, to extract characteristic vectors from data of the speaker-to-be-recognized corpus corresponding to the window, so as to construct a first characteristic vector set.

Extracting characteristic vectors may be either extracting time domain characteristics or extracting frequency domain characteristics, because both the characteristics can reflect properties of voice of a speaker-to-be-recognized. Descriptions will be made by taking the frequency domain characteristics as an example below.

Firstly, voice is divided into frames, each frame being 25 milliseconds long. The predetermined sliding step is for example 10 milliseconds. For each frame, 13-dimenisonal mel frequency cepstral coefficients (MFCC) characteristics and logarithmic energy are extracted, totaling 14-dimenisonal characteristics.

Then, for the 14-dimenisonal characteristics, by taking a total of five frames preceding and following each frame as context, first-order differential characteristics (14-dimenisonal characteristics) and two-order differential characteristics (14-dimenisonal characteristics) are calculated, totaling 14*3=42-dimensional characteristics. A characteristic vector $sequence\ X = \{x_t, t =1,...,T\}$ of the speaker to be recognized is thus obtained. $\mathbf{X_t}$ represents a 42-dimenisonal characteristic vector, T represents the number of characteristic vectors, sliding is performed for a total of T-1 times, and generally speaking, it is better if T is greater.

If the time domain characteristics are extracted, for example, each frame may be 25 milliseconds long, a sampling rate may be 8 kHz, and each character vector may have 200 characteristic values (sampling values).

Voice characteristics of a speaker to be recognized reflect properties of voice of the speaker to be recognized, and a speaker-to-be-recognized model will be obtained based on the voice characteristics of the speaker to be recognized using a universal background model UBM, a gradient universal speaker model GUSM and a total change matrix below.

In the step S2, a speaker-to-be-recognized model is obtained based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes.

Firstly, constructions of the universal background model UBM, the gradient universal speaker model GUSM and the total change matrix will be introduced.

FIG. 2 illustrates a flowchart of a method for obtaining a universal background model UBM and a gradient universal speaker model GUSM according to an embodiment of the present invention. As shown in FIG. 2, the method for obtaining the UBM and the GUSM comprises the steps of: scanning a first training corpus by sliding a predetermined window with a predetermined sliding step, to extract characteristic vectors from data of the first training corpus corresponding to the window, so as to construct a second characteristic vector set (S21); training the UBM using the second characteristic vector set (S22); and inputting the second characteristic vector set into a differential function of the UBM and averaging, so as to obtain the GUSM (S23).

In the step S21, a first training corpus is scanned by sliding a predetermined window with a predetermined sliding step, to extract characteristic vectors from data of the first training corpus corresponding to the window, so as to construct a second characteristic vector set.

The step S21 is similar to the step S1 described above. The step S21 differs from the step S1 in that in the step S21 the scanned object is a first training corpus and obtained results correspondingly construct a second characteristic vector set.

The first training corpus includes voice data which are from various speakers, collected using various audio capturing devices, transmitted via various channels (such as wired channels represented by telephones and wireless channels represented by mobile telephones) and under various surrounding environments.

The respective speakers herein may include known speakers and may also not include known speakers. The known speakers are speakers for comparison with the speaker to be recognized. Since the method of FIG. 2 aims to obtain universal models, the speakers corresponding to the first training corpus do not necessarily include the known speakers.

Preferably, the speakers corresponding to the first training corpus are as many as possible, the used audio capturing devices, the channels and ambient environments involved in the first training corpus are diversified as far as possible.

The ambient environments for example are quiet and noisy ambient environments. The environments involved in the total change matrix reflecting environmental changes are environments in a broad sense, including the sum of audio capturing devices, channels and ambient environments.

In the step S22, the UBM is trained using the second characteristic vector set, to obtain parameters of the UBM.

The UBM may be represented as $u_\lambda(x) = \sum_{i=1}^{2048} \omega_i u_i(x)$. It can be seen that $u_\lambda(x)$ is composed of 2048 $u_i(x)$s whose weights are $\omega_i$, wherein 2048 is only an example. Each $u_i(x)$ is a Gaussian function. Of course, $u_i(x)$ may also be a β-distribution function, a Rodgers function, etc. Taking $u_i(x)$ which is a Gaussian function as an example, parameters included in $u_i(x)$ are mean value and variance. The weights $\omega_i$ and the parameters of $u_i(x)$ are collectively called parameter λ. Thus $u_\lambda(x)$ is a function with the parameter λ.

The parameter λ can be obtained by using the second characteristic vector set, for example by adopting expectation maximization algorithm, such that $u_\lambda(x)$ becomes a specific function, that is, the UBM is trained.

Taking a derivative for $u_\lambda(x)$ to obtain a differential function $\nabla_\lambda u_\lambda(x)$ of the UBM.

In the step S23, the second characteristic vector set is inputted into a differential function of the UBM and averaged, so as to obtain the GUSM:

$$g_\lambda = \frac{1}{T} \nabla_\lambda u_\lambda(x),$$ wherein T represents the number of characteristic vectors.

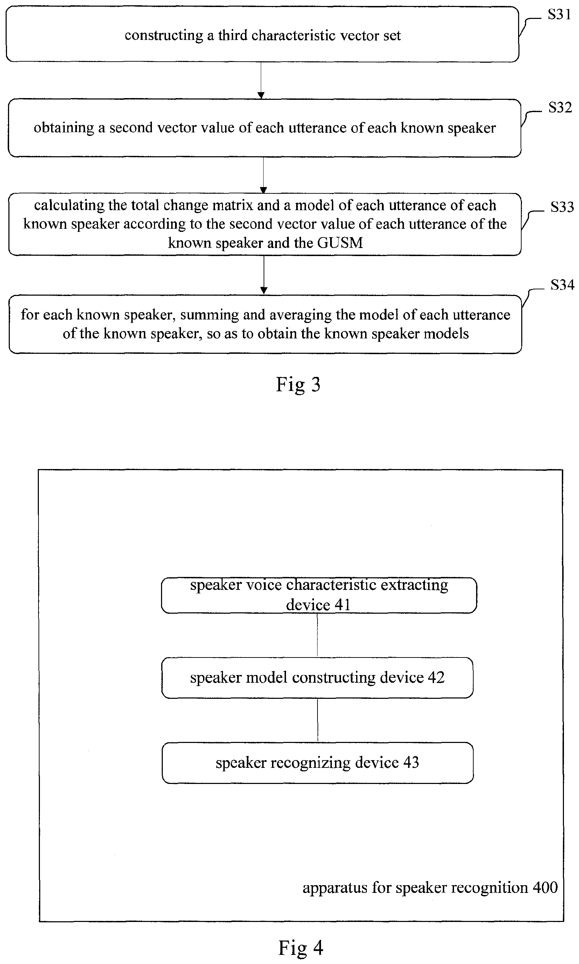

FIG. 3 illustrates a flowchart of a method for obtaining a total change matrix and known speaker models according to an embodiment of the present invention. As shown in FIG. 3, the method for obtaining a total change matrix and known speaker models comprises the steps of: scanning a second training corpus by sliding a predetermined window with a predetermined sliding step, to extract characteristic vectors from data of the second training corpus corresponding to the window for each utterance of each known speaker, so as to construct a third characteristic vector set (S31); inputting the third characteristic vector set for each utterance of each known speaker into a differential function of the UBM and averaging, so as to obtain a second vector value of each utterance of each known speaker (S32); calculating the total change matrix and a model of each utterance of each known speaker according to the second vector value of each utterance of the known speaker and the GUSM (S33); for each known speaker, summing and averaging the model of each utterance of the known speaker, so as to obtain the known speaker models (S34).

In the step S31, a second training corpus is scanned by sliding a predetermined window with a predetermined sliding step, to extract characteristic vectors from data of the second training corpus corresponding to the window for each utterance of each known speaker, so as to construct a third characteristic vector set.

The step S31 is performed according to a similar way to the above step S21, and the step S31 differs from the step S21 in that: in the step S31, a scanned object is a second training corpus. The second training corpus includes voice data which are from known speakers, collected using various audio capturing devices, transmitted via various channels and under various surrounding environments, because the method as shown in FIG. 3 attempts to obtain known speaker models.

In addition, the step S31 further differs from the step S21 in that: in the step S31, extraction of characteristic vectors is performed for each utterance of each known speaker. For example, each utterance of each known speaker is a WAV file, and scanning is performed with a predetermined sliding step for each utterance of each known speaker.

To facilitate descriptions, the known speakers are represented as s, where s=1,...,S. S represents the total number of the known speakers. The utterances of the known speaker s are presented as h, where h=1,...,H(s). H(s) represents the total number of the utterances of the known speaker s. A characteristic vector $X_h(s)$ is extracted for each utterance of each speaker, and a third characteristic vector set $X(s) = \{X_1(s),..., X_{H(s)}(s)\}$ is extracted for each speaker.

In the step S32, the third characteristic vector set for each utterance of each known speaker is inputted into a differential function of the UBM and averaged, so as to obtain a second vector value of each utterance of each known speaker.

As stated above, a differential function $\nabla_\lambda u_\lambda(x)$ of the UBM is obtained in the above step S22.

In the step S32, the third characteristic vector set for each utterance of each known speaker is inputted into a differential function of the UBM and averaged, that is, is put into $G_{s,h} = \dfrac{1}{T_{s,h}} \nabla_\lambda u_\lambda(x)$, where $T_{s,h}$ represents the number of characteristic vectors of each utterance of each known speaker. The obtained $G_{s,n}$ represents a second vector value of each utterance of each known speaker.

In the step S33, the total change matrix and a model of each utterance of each known speaker and calculated according to the second vector value of each utterance of the known speaker and the GUSM.

The equation set for the calculation is as follows:

$$G_{1,1} = g_\lambda + Mw_1$$

$$\ldots\ldots$$

$$G_{s,h} = g_\lambda + Mw_{s,h}$$

$$\ldots\ldots$$

$$G_{S,H} = g_\lambda + Mw_{S,H}$$

where $G_{s,h}$ represents a second vector value of each utterance of each known speaker, $g_\lambda$ represents the GUSM obtained in the step S23, M represents the total change matrix, and $w_{s,h}$ represents a model of the utterance h of the known speaker s, which is a random variable according with the normal distribution N(0,1).

In the step S34, for each known speaker, the model of each utterance of the known speaker is summed and averaged, so as to obtain the known speaker models.

That is, $w_s = \dfrac{1}{H(s)} \sum_{h=1}^{H(s)} w_{s,h}$ is executed.

Accordingly, by the methods as shown in FIG. 2 and FIG. 3, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes can be obtained. Thus, in the step S2, a speaker-to-be-recognized model $w_s$ can be obtained based on the extracted voice characteristics of the speaker to be recognized, a universal background model UBM, a gradient universal speaker model GUSM and a total change matrix.

Specifically, the first characteristic vector set extracted in the step S1 is inputted to a differential function of the UBM and averaged, so as to obtain a first vector value. That is, $G_{test} = \dfrac{1}{T} \nabla_\lambda u_\lambda(x)$ is executed.

Then, a product of a pseudo-inverse matrix of the total change matrix and a difference between the first vector value and the GUSM is used as the speaker-to-be-recognized model $w_{test} = pinv(M)(G_{test} - g_\lambda)$, where pinv () represents calculating a pseudo-inverse matrix.

In the step S3, the speaker-to-be-recognized model is compared with known speaker models, to determine whether or not the speaker to be recognized is one of known speakers.

Specifically, similarities, e.g. cosine angles, of the speaker-to-be-recognized model with the known speaker models are calculated.

Then, the speaker to be recognized is recognized as being: the known speaker corresponding to the known speaker model whose similarity with the speaker-to-be-recognized model is greatest and is greater than a similarity threshold.

In a case where a maximum number of the similarities of the speaker-to-be-recognized model with the known speaker models is less than or equal to the similarity threshold, the speaker to be recognized is recognized as being a speaker other than the known speakers.

An apparatus for speaker recognition according to an embodiment of the present invention will be described with reference to FIG. 4 below.

FIG. 4 illustrates a structural block diagram of an apparatus for speaker recognition according to an embodiment of the present invention. As shown in FIG. 4, the apparatus 400 for speaker recognition according to the embodiment of the present invention comprises: a speaker voice characteristic extracting device 41 configured to: extract, from a speaker-to-be-recognized corpus, voice characteristics of a speaker to be recognized; a speaker model constructing device 42 configured to: obtain a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and a speaker recognizing device 43 configured to: compare the speaker-to-be-recognized model with known speaker models to determine whether or not the speaker to be recognized is one of known speakers.

In one embodiment, the speaker voice characteristic extracting device 41 is further configured to: scan the speaker-to-be-recognized corpus by sliding a predetermined window with a predetermined sliding step, extract characteristic vectors from data of the speaker-to-be-recognized corpus corresponding to the window, so as to construct a first characteristic vector set.

In one embodiment, the speaker model constructing device 42 is further configured to: input the first characteristic vector set into a differential function of the UBM and average, so as to obtain a first vector value; use, as the speaker-to-be-recognized model, a product of a pseudo-inverse matrix of a total change matrix and a difference between the first vector value and the GUSM.

In one embodiment, the apparatus 400 for speaker recognition further comprises: a UBM and GUSM acquiring device, configured to: scan a first training corpus by sliding a predetermined window with a predetermined sliding step, to extract characteristic vectors from data of the first training corpus corresponding to the window, so as to construct a second characteristic vector set; train the UBM using the second characteristic vector set; input the second characteristic vector set into a differential function of the UBM and average, so as to obtain the GUSM; wherein the first training corpus includes voice data which are from various speakers, collected using various audio capturing devices, transmitted via various channels and under various surrounding environments.

In one embodiment, the apparatus 400 for speaker recognition further comprises: a total change matrix and known speaker model acquiring device configured to: scan a second training corpus by sliding a predetermined window with a predetermined sliding step, to extracting characteristic vectors from data of the second training corpus corresponding to the window for each utterance of each known speaker, so as to construct a third characteristic vector set; input the third characteristic vector set for each utterance of each known speaker into a differential function of the UBM and average, so as to obtain a second vector value of each utterance of each known speaker; calculate the total change matrix and a model of each utterance of each known speaker according to the second vector value of each utterance of the known speaker and the GUSM; for each known speaker, sum and average the model of each utterance of the known speaker, so as to obtain the known speaker models; wherein the second training corpus includes voice data which are from known speakers, collected using various audio capturing devices, transmitted via various channels and under various surrounding environments.

In one embodiment, the speaker recognizing device 43 is further configured to: calculate similarities of the speaker-to-be-recognized model with the known speaker models; recognize the speaker to be recognized as being: the known speaker corresponding to the known speaker model whose similarity with the speaker-to-be-recognized model is greatest and is greater than a similarity threshold.

In one embodiment, the speaker recognizing device 43 is further configured to: in a case where a maximum number of the similarities of the speaker-to-be-recognized model with the known speaker models is less than or equal to the similarity threshold, recognize the speaker to be recognized as being a speaker other than the known speakers.

Since the processing in the respective devices and units included in the apparatus 400 for speaker recognition according to embodiments of the present invention are respectively similar to those in the respective steps included in the method for speaker recognition described above, detailed descriptions of these devices and units are omitted herein for the sake of conciseness.

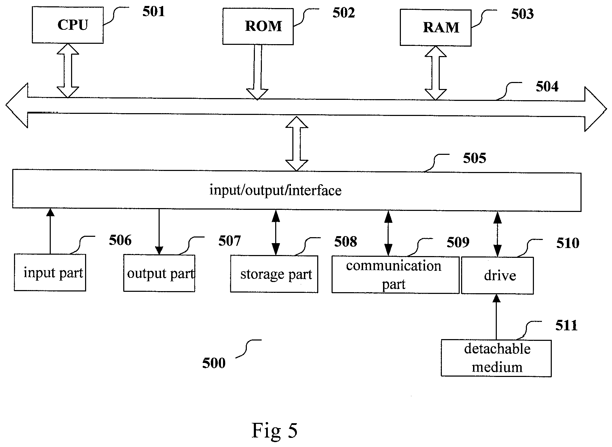

In addition, it shall also be noted that the respective constituent devices and units in the above apparatus can be configured by software, firmware, hardwire or a combination thereof. Specific means or manners that can be used for the configuration will not be stated repeatedly herein since they are well-known to those skilled in the art. In case of implementation by software or firmware, programs constituting the software are installed from a storage medium or a network to a computer (e.g. the universal computer 500 as shown in FIG. 5) having a dedicated hardware structure; the computer, when being installed with various programs, can implement various functions and the like.

FIG. 5 illustrates a schematic block diagram of a computer which may be used for implementing the method and apparatus according to the embodiments of the present invention.

In FIG. 5, a central processing unit (CPU) 501 executes various processing according to a program stored in a read-only memory (ROM) 502 or a program loaded from a storage section 508 to a random access memory (RAM) 503. In the RAM 503, data needed when the CPU 501 executes various processing and the like is also stored according to requirements. The CPU 501, the ROM 502 and the RAM 503 are connected to each other via a bus 504. An input/output interface 505 is also connected to the bus 504.

The following components are connected to the input/output interface 505: an input part 506 (including a keyboard, a mouse and the like); an output part 507 (including a display, such as a Cathode Ray Tube (CRT), a Liquid Crystal Display (LCD) and the like, as well as a loudspeaker and the like); the storage part 508 (including a hard disc and the like); and a communication part 509 (including a network interface card such as an LAN card, a modem and so on). The communication part 509 performs communication processing via a network such as the Internet. According to requirements, a drive 510 may also be connected to the input/output interface 505. A detachable medium 511 such as a magnetic disc, an optical disc, a magnetic optical disc, a semiconductor memory and the like may be installed on the drive 510 according to requirements, such that a computer program read therefrom is installed in the storage part 508 according to requirements.

In the case of carrying out the foregoing series of processing by software, programs constituting the software are installed from a network such as the Internet or a storage medium such as the detachable medium 511.

Those skilled in the art should appreciate that such a storage medium is not limited to the detachable medium 511 storing therein a program and distributed separately from the apparatus to provide the program to a user as shown in FIG. 5. Examples of the detachable medium 511 include a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Or, the storage medium may be hard discs and the like included in the ROM 502 and the storage part 508 in which programs are stored, and are distributed concurrently with the apparatus including them to users.

An embodiment of the present invention further provides a program product storing machine-readable instruction code. When being read and executed by a machine, the instruction code can implement the method according to embodiments of the present invention.

Correspondingly, a storage medium for carrying the program product storing the machine-readable instruction code is also included in an embodiment of the disclosure of the present invention. The storage medium includes but is not limited to a floppy disc, an optical disc, a magnetic optical disc, a memory card, a memory stick and the like.

In the forgoing descriptions of the specific embodiments of the present invention, features described and/or shown for one embodiment may be used in one or more other embodiments according to an identical or similar way, be combined with features in other embodiments, or substitute features in other embodiments.

It should be emphasized that when used in the text, the term "comprise/include" refers to existence of features, elements, steps or components, but does not exclude existence or addition of one or more other features, elements, steps or components.

In addition, the method according to embodiments the present invention is not limited to be performed in the temporal order described in the specification, but may also be performed sequentially, in parallel or independently in other temporal orders. Thus the order of performing the method as described in the specification does not constitute a limitation to the technical scope of the embodiments of the present invention.

Although the present invention has been disclosed above by describing the specific embodiments of the present invention, it should be understood that all the embodiments and examples as described above are exemplary, but not limitative. Those skilled in the art could carry out various modifications, improvements or equivalents for the present invention within the spirit and scope of the appended claims. The modifications, improvements or equivalents shall also be regarded as being included in the scope of protection of the present invention.

Annexes

Annex 1: A method for speaker recognition, comprising:

extracting, from a speaker-to-be-recognized corpus, voice characteristics of a speaker to be recognized:

obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and

comparing the speaker-to-be-recognized model with known speaker models, to determine whether or not the speaker to be recognized is one of known speakers.

Annex 2: The method according to Annex 1, wherein the extracting, from a speaker-to-be-recognized corpus, voice characteristics of a speaker to be recognized, comprises:

scanning the speaker-to-be-recognized corpus by sliding a predetermined window with a predetermined sliding step, to extract characteristic vectors from data of the speaker-to-be-recognized corpus corresponding to the window, so as to construct a first characteristic vector set.

Annex 3. The method according to Annex 2, wherein the obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes comprises:

inputting the first characteristic vector set into a differential function of the UBM and averaging, so as to obtain a first vector value;

using, as the speaker-to-be-recognized model, a product of a pseudo-inverse matrix of the total change matrix and a difference between the first vector value and the GUSM.

Annex 4. The method according to Annex 1, wherein the UBM and the GUSM are obtained by the steps of:

scanning a first training corpus by sliding a predetermined window with a predetermined sliding step, to extract characteristic vectors from data of the first training corpus corresponding to the window, so as to construct a second characteristic vector set;

training the UBM using the second characteristic vector set;

inputting the second characteristic vector set into a differential function of the UBM and averaging, so as to obtain the GUSM;

wherein the first training corpus includes voice data which are from various speakers, collected using various audio capturing devices, transmitted via various channels and under various surrounding environments.

Annex 5. The method according to Annex 1, wherein the total change matrix and the known speaker models are obtained by the steps of:

scanning a second training corpus by sliding a predetermined window with a predetermined sliding step, to extract characteristic vectors from data of the second training corpus corresponding to the window for each utterance of each known speaker, so as to construct a third characteristic vector set;

inputting the third characteristic vector set for each utterance of each known speaker into a differential function of the UBM and averaging, so as to obtain a second vector value of each utterance of each known speaker;

calculating the total change matrix and a model of each utterance of each known speaker according to the second vector value of each utterance of the known speaker and the GUSM;

for each known speaker, summing and averaging the model of each utterance of the known speaker, so as to obtain the known speaker models ;

wherein the second training corpus includes voice data which are from known speakers, collected using various audio capturing devices, transmitted via various channels and under various surrounding environments.

Annex 6: The method according to Annex 1, wherein the comparing the speaker-to-be-recognized model with known speaker models to determine whether or not the speaker to be recognized is one of known speakers comprises:

calculating similarities of the speaker-to-be-recognized model with the known speaker models;

recognizing the speaker to be recognized as being: the known speaker corresponding to the known speaker model whose similarity with the speaker-to-be-recognized model is greatest and is greater than a similarity threshold.

Annex 7: The method according to Annex 6, wherein in a case where a maximum number of the similarities of the speaker-to-be-recognized model with the known speaker models is less than or equal to the similarity threshold, the speaker to be recognized is recognized as being a speaker other than the known speakers.

Annex 8: An apparatus for speaker recognition, comprising:

a speaker voice characteristic extracting device configured to: extract, from a speaker-to-be-recognized corpus, voice characteristics of a speaker to be recognized:

a speaker model constructing device configured to: obtain a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and

a speaker recognizing device configured to: compare the speaker-to-be-recognized model with known speaker models to determine whether or not the speaker to be recognized is one of known speakers.

Annex 9: The apparatus according to Annex 8, wherein the speaker voice characteristic extracting device is further configured to:

scan the speaker-to-be-recognized corpus by sliding a predetermined window with a predetermined sliding step, to extract characteristic vectors from data of the speaker-to-be-recognized corpus corresponding to the window, so as to construct a first characteristic vector set.

Annex 10: The apparatus according to Annex 9, wherein the speaker model constructing device is further configured to:

input the first characteristic vector set into a differential function of the UBM and average, so as to obtain a first vector value;
use, as the speaker-to-be-recognized model, a product of a pseudo-inverse matrix of the total change matrix and a difference between the first vector value and the GUSM.

Annex 11: The apparatus according to Annex 8, further comprising: a UBM and GUSM acquiring device configured to:

scan a first training corpus by sliding a predetermined window with a predetermined sliding step, to extract characteristic vectors from data of the first training corpus corresponding to the window, so as to construct a second characteristic vector set;

train the UBM using the second characteristic vector set;
input the second characteristic vector set into a differential function of the UBM and average, so as to obtain the GUSM;
wherein the first training corpus includes voice data which are from various speakers, collected using various audio capturing devices, transmitted via various channels and under various surrounding environments.

Annex 12: The apparatus according to Annex 8, further comprising: a total change matrix and known speaker model acquiring device configured to:

scan a second training corpus by sliding a predetermined window with a predetermined sliding step, to extract characteristic vectors from data of the second training corpus corresponding to the window for each utterance of each known speaker, so as to construct a third characteristic vector set;
input the third characteristic vector set for each utterance of each known speaker into a differential function of the UBM and average, so as to obtain a second vector value of each utterance of each known speaker;
calculate the total change matrix and a model of each utterance of each known speaker according to the second vector value of each utterance of the known speaker and the GUSM;
for each known speaker, sum and average the model of each utterance of the known speaker, so as to obtain the known speaker models;
wherein the second training corpus includes voice data which are from known speakers, collected using various audio capturing devices, transmitted via various channels and under various surrounding environments.

Annex 13: The apparatus according to Annex 8, wherein the speaker recognizing device is further configured to:

calculate similarities of the speaker-to-be-recognized model with the known speaker models;
recognize the speaker to be recognized as being: the known speaker corresponding to the known speaker model whose similarity with the speaker-to-be-recognized model is greatest and is greater than a similarity threshold.

Annex 14: The apparatus according to Annex 13, wherein the speaker recognizing device is further configured to: in a case where a maximum number of the similarities of the speaker-to-be-recognized model with the known speaker models is less than or equal to the similarity threshold, recognize the speaker to be recognized as being a speaker other than the known speakers.

## Claims

1. A method for speaker recognition, comprising:

   extracting, from a speaker-to-be-recognized corpus, voice characteristics of a speaker to be recognized:

   obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and
   comparing the speaker-to-be-recognized model with known speaker models, to determine whether or not the speaker to be recognized is one of known speakers.

2. The method according to claim 1, wherein the extracting, from a speaker-to-be-recognized corpus, voice characteristics of a speaker to be recognized, comprises:

   scanning the speaker-to-be-recognized corpus by sliding a predetermined window with a predetermined sliding step, to extract characteristic vectors from data of the speaker-to-be-recognized corpus corresponding to the window, so as to construct a first characteristic vector set.

3. The method according to claim 2, wherein the obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes comprises:

   inputting the first characteristic vector set into a differential function of the UBM and averaging, so as to obtain a first vector value;
   using, as the speaker-to-be-recognized model, a product of a pseudo-inverse matrix of the total change matrix and a difference between the first vector value and the GUSM.

4. The method according to any preceding claim, wherein the UBM and the GUSM are obtained by the steps of:

   scanning a first training corpus by sliding a predetermined window with a predetermined sliding step, to extract characteristic vectors from data of the first training corpus corresponding to the window, so as to construct a second characteristic vector set;
   training the UBM using the second characteristic vector set;
   inputting the second characteristic vector set into a differential function of the UBM and averaging, so as to obtain the GUSM;
   wherein the first training corpus includes voice data which are from various speakers, collected using various audio capturing devices, transmitted via various channels and under various surrounding environments.

5. The method according to any preceding claim, wherein the total change matrix and the known speaker models are obtained by the steps of:

   scanning a second training corpus by sliding a predetermined window with a predetermined sliding step, to extract characteristic vectors from data of the second training corpus corresponding to the window for each utterance of each known speaker, so as to construct a third characteristic vector set;
   inputting the third characteristic vector set for each utterance of each known speaker into a differential function of the UBM and averaging, so as to obtain a second vector value of each utterance of each known speaker;
   calculating the total change matrix and a model of each utterance of each known speaker according to the second vector value of each utterance of the known speaker and the GUSM;
   for each known speaker, summing and averaging the model of each utterance of the known speaker, so as to obtain the known speaker models;
   wherein the second training corpus includes voice data which are from known speakers, collected using various audio capturing devices, transmitted via various channels and under various surrounding environments.

6. The method according to any preceding claim, wherein the comparing the speaker-to-be-recognized model with known speaker models to determine whether or not the speaker to be recognized is one of known speakers comprises:

   calculating similarities of the speaker-to-be-recognized model with the known speaker models; recognizing the speaker to be recognized as being: the known speaker corresponding to the known speaker model whose similarity with the speaker-to-be-recognized model is greatest and is greater than a similarity threshold.

7. The method according to claim 6, wherein in a case where a maximum number of the similarities of the speaker-to-be-recognized model with the known speaker models is less than or equal to the similarity threshold, the speaker to be recognized is recognized as being a speaker other than the known speakers.

8. An apparatus for speaker recognition, comprising:

a speaker voice characteristic extracting device configured to: extract, from a speaker-to-be-recognized corpus, voice characteristics of a speaker to be recognized;
a speaker model constructing device configured to: obtain a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and
a speaker recognizing device configured to: compare the speaker-to-be-recognized model with known speaker models to determine whether or not the speaker to be recognized is one of known speakers.

9. The apparatus according to claim 8, wherein the speaker voice characteristic extracting device is further configured to:

scan the speaker-to-be-recognized corpus by sliding a predetermined window with a predetermined sliding step, extract characteristic vectors from data of the speaker-to-be-recognized corpus corresponding to the window, so as to construct a first characteristic vector set.

10. The apparatus according to claim 9, wherein the speaker model constructing device is further configured to:

input the first characteristic vector set into a differential function of the UBM and average, so as to obtain a first vector value;
use, as the speaker-to-be-recognized model, a product of a pseudo-inverse matrix of a total change matrix and a difference between the first vector value and the GUSM.

11. The apparatus according to any of claims 8 to 10, further comprising: a UBM and GUSM acquiring device configured to:

scan a first training corpus by sliding a predetermined window with a predetermined sliding step, to extract characteristic vectors from data of the first training corpus corresponding to the window, so as to construct a second characteristic vector set;
train the UBM using the second characteristic vector set;
input the second characteristic vector set into a differential function of the UBM and average, so as to obtain the GUSM;
wherein the first training corpus includes voice data which are from various speakers, collected using various audio capturing devices, transmitted via various channels and under various surrounding environments.

12. The apparatus according to any of claims 8 to 11, further comprising: a total change matrix and known speaker model acquiring device configured to:

scan a second training corpus by sliding a predetermined window with a predetermined sliding step, to extract characteristic vectors from data of the second training corpus corresponding to the window for each utterance of each known speaker, so as to construct a third characteristic vector set;
input the third characteristic vector set for each utterance of each known speaker into a differential function of the UBM and average, so as to obtain a second vector value of each utterance of each known speaker;
calculate the total change matrix and a model of each utterance of each known speaker according to the second vector value of each utterance of the known speaker and the GUSM;
for each known speaker, sum and average the model of each utterance of the known speaker, so as to obtain the known speaker models;
wherein the second training corpus includes voice data which are from known speakers, collected using various audio capturing devices, transmitted via various channels and under various surrounding environments.

13. The apparatus according to any of claims 8 to 12, wherein the speaker recognizing device is further configured to:

calculate similarities of the speaker-to-be-recognized model with the known speaker models; recognize the speaker to be recognized as being: the known speaker corresponding to the known speaker model whose similarity with the speaker-to-be-recognized model is greatest and is greater than a similarity threshold.

14. The apparatus according to claim 13, wherein the speaker recognizing device is further configured to: in a case where a maximum number of the similarities of the speaker-to-be-recognized model with the known speaker models is less than or equal to the similarity threshold, recognize the speaker to be recognized as being a speaker other than the known speakers.

15. A non-transitory computer readable medium with computer executable instructions for:

extracting, from a speaker-to-be-recognized corpus, voice characteristics of a speaker to be recognized:

obtaining a speaker-to-be-recognized model based on the extracted voice characteristics of the speaker to be recognized, a universal background model UBM reflecting distribution of the voice characteristics in a characteristic space, a gradient universal speaker model GUSM reflecting statistic values of changes of the distribution of the voice characterizes in the characteristic space and a total change matrix reflecting environmental changes; and

comparing the speaker-to-be-recognized model with known speaker models, to determine whether or not the speaker to be recognized is one of known speakers.

extracting, from a speaker-to-be-recognized corpus, voice characteristics of a speaker to be recognized — S1

obtaining a speaker-to-be-recognized model based on the voice characteristics of the speaker to be recognized, a universal background model UBM, a gradient universal speaker model GUSM and a total change matrix — S2

comparing the speaker-to-be-recognized model with known speaker models, to determine whether or not the speaker to be recognized is one of known speakers — S3

Fig 1

constructing a second characteristic vector set — S21

training the UBM using the second characteristic vector set — S22

inputting the second characteristic vector set into a differential function of the UBM and averaging, so as to obtain the GUSM — S23

Fig 2

| | |
|---|---|
| constructing a third characteristic vector set | S31 |
| obtaining a second vector value of each utterance of each known speaker | S32 |
| calculating the total change matrix and a model of each utterance of each known speaker according to the second vector value of each utterance of the known speaker and the GUSM | S33 |
| for each known speaker, summing and averaging the model of each utterance of the known speaker, so as to obtain the known speaker models | S34 |

Fig 3

speaker voice characteristic extracting device 41

speaker model constructing device 42

speaker recognizing device 43

apparatus for speaker recognition 400

Fig 4

CPU — 501    ROM — 502    RAM — 503

— 504

— 505

input/output/interface

506    507    508    509    510

input part    output part    storage part    communication part    drive

500

detachable medium — 511

Fig 5

Europäisches
Patentamt

European
Patent Office

Office européen
des brevets

## EUROPEAN SEARCH REPORT

Application Number

EP 17 16 3685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KINNUNEN T ET AL: "An overview of text-independent speaker recognition: From features to supervectors", SPEECH COMMUNICATION, ELSEVIER SCIENCE PUBLISHERS, AMSTERDAM, NL, vol. 52, no. 1, 1 January 2010 (2010-01-01), pages 12-40, XP026699600, ISSN: 0167-6393, DOI: 10.1016/J.SPECOM.2009.08.009 [retrieved on 2009-09-03] * Section 2; figure 1 * | 1-15 | INV. G10L17/04 |
| A | TAUFIQ HASAN ET AL: "A Study on Universal Background Model Training in Speaker Verification", IEEE TRANSACTIONS ON AUDIO, SPEECH AND LANGUAGE PROCESSING, IEEE, vol. 19, no. 7, 1 September 2011 (2011-09-01), pages 1890-1899, XP011329587, ISSN: 1558-7916, DOI: 10.1109/TASL.2010.2102753 * Section II and III * | 2,9 | |
| A | WEI WU ET AL: "A Cohort-Based Speaker Model Synthesis for Mismatched Channels in Speaker Verification", IEEE TRANSACTIONS ON AUDIO, SPEECH AND LANGUAGE PROCESSING, IEEE, vol. 15, no. 6, 1 August 2007 (2007-08-01) , pages 1893-1903, XP011187720, ISSN: 1558-7916, DOI: 10.1109/TASL.2007.899297 * page 1893, right column, second paragraph * | 1,8,15 | TECHNICAL FIELDS SEARCHED (IPC) G10L |

The present search report has been drawn up for all claims

| Place of search | Date of completion of the search | Examiner |
|---|---|---|
| The Hague | 22 August 2017 | Taddei, Hervé |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................
& : member of the same patent family, corresponding
document

EPO FORM 1503 03.82 (P04C01)